# EUROPEAN PATENT APPLICATION

(11) **EP 2 063 601 A2**
(43) Date of publication of application: **27.05.2009**
(21) Application number: 08105605.3
(22) Date of filing: 25.08.2004
(51) Int. Cl.: H04L 29/06

(54) **Methods to enhance WLAN security**

(30) Priority: 19.09.2003 CN 03124912
(62) Divisional of application: 04769850.1
(71) Applicant: NXP B.V., 5656 AG Eindhoven (NL)
(72) Inventor: Li, Li c/o NXP Semiconductors-IPD, Redhill, Surrey, RH1 1DL (GB); Wu, Keyi c/o NXP Semiconductors-IPD, Redhill, Surrey, RH1 1DL (GB); Li, Wei c/o NXP Semiconductors-IPD, Redhill, Surrey RH1 1DL (GB); Guo, Haoguang c/o NXP Semiconductors-IPD, Redhill, Surrey, RH1 1DL (GB); Luo, Zhihong c/o NXP Semiconductors-IPD, Redhill, Surrey, RH1 1DL (GB)
(74) Representative: Williamson, Paul Lewis

(57) **Abstract**

A method is provided for enhancing WLAN security performed by a wireless terminal (100), comprising steps of reading the key stored in an identification card (60) independent from the wireless terminal (100), requesting a wireless access point (200) for identification authentication according to the read key and a corresponding encryption algorithm, and accessing a WLAN if the authentication succeeds.

## Description

### FIELD OF INVENTION

The present invention relates generally to a method for enhancing WLAN security, and more particularly, to a method for enhancing WLAN security by using ID (identification) card.

### BACKGROUND OF THE INVENTION

WLAN is a flexible data communication system, by using radio waves to transmit and receive data. Thus it minimizes the requirement for wired connection and combines data connectivity with user mobility. Furthermore, WLAN is easy to be deployed, so it is widely used in buildings and on campus as an expansion to, or as an alternative for wired LAN.

Different from wired LAN that uses wired media to transfer signals from one point to another, WLAN uses wireless media (such as radio wave, infrared and etc) to transmit signals in form of broadcast. Hence, a wireless terminal in a WLAN can receive all signals from other wireless terminals within the coverage range of the same wireless AP (Access Point), although these signals are not targeting to it. Therefore, information transferred in a WLAN may easily be intercepted by other wireless terminals not belonging to the WLAN, if no security measures are taken to safeguard the WLAN.

To settle the above security issue in WLAN, manufacturers have put forward some security methods for wireless networks to guarantee that information can be transferred securely through wireless media. A brief introduction will be given below to how wireless network security methods can ensure information's secure transmission through wireless media in WLAN, by exemplifying WEP (wireless equivalent privacy) method utilized by WLAN based on 802.11 standard.

WEP method safeguards network information by using the same encryption/decryption algorithm and the same encryption and decryption keys with two security measures, i.e. perform ID authentication on wireless terminals to access the network and encrypt information transmitted in the wireless media.

In a WLAN based on 802.11 standard, when a user wants to access the network through a wireless terminal, ID authentication is first needed for the wireless terminal. Specifically as follows:
(a) the wireless terminal to access the network requests the wireless AP for ID authentication;
(b) the wireless AP returns the plaintext message for ID authentication to the wireless terminal after receiving the request for ID authentication;
(c) after receiving the plaintext message for ID authentication, the wireless terminal encrypts the plaintext message with the encryption algorithm and the encryption key provided by the WEP method, to get the ciphertext message for ID authentication, and transmits it to the wireless AP;
(d) after receiving the ciphertext message for ID authentication from the wireless terminal, the wireless AP decrypts the ciphertext message using the decryption algorithm and decryption key provided by the WEP method, to get the plaintext message for ID authentication, and compares the decrypted plaintext message with the original plaintext message for ID authentication sent to the wireless terminal. If the two messages are matched, the wireless terminal will be permitted to access the network; otherwise, the wireless terminal will not be permitted to access the network, and the wireless terminal can be called as unauthorized wireless terminal.

After the wireless accesses the network, users can exchange data with the WLAN through the wireless terminal and the wireless AP. During data exchange process, the wireless terminal encrypts the data transmitted to the wireless AP, by using the encryption algorithm and encryption key provided by the WEP method, and decrypts the encrypted data from the wireless AP, by using the decryption algorithm and decryption key. The wireless AP performs the same operations on data from the wireless terminal and those transmitted to the wireless terminal.

Unauthorized wireless terminals are prevented to enter into the network or intercept the data transmitted through performing ID authentication on wireless terminals attempting to access the network and encrypting the data transmitted over wireless media, thus security of the network is enhanced. Of course, there are some cases when wireless terminals can enter into the network or intercept the data transmitted by cracking the encryption/decryption algorithms or keys. However, with more intensive studies on wireless network security, security methods will adopt more and more robust encryption/decryption algorithms and encryption/decryption keys, which will make it more and more difficult for cracking the encryption/decryption algorithms and keys.

But even things going like that, security vulnerabilities still emerge frequently in WLAN caused by the users' reason, specifically as the following:
First, although wireless network security methods offer ID authentication mechanisms, some users in the WLAN may sideline the ID authentication mechanisms for wireless terminals attempting to access the network, thus unauthorized terminals may easily access the network.
Second, keys to be used by encryption/decryption algorithms are usually kept in the wireless terminal in form of plaintext, so users may carelessly leak out the key sometimes very easily.
As noted above, it is necessary to offer a method for enhancing WLAN security so that unauthorized wireless terminals can be prevented to enter the network and keys won't be leaked out easily.

### SUMMARY OF THE INVENTION

An object of the present invention is to provide a method for enhancing WLAN security, capable of performing mandatory ID authentication on wireless terminals attempting to access the WLAN to avoid network insecurity caused by the entry of unauthorized wireless terminals.

Another object of the present invention is to provide a method for enhancing WLAN security. With this method, keys are stored in ID cards independent of wireless terminals to enhance security of the keys.

According to a first aspect of the invention there is provided a method for enhancing WLAN security, comprising at a wireless terminal:
(a) reading a key stored in an identification card;
(b) requesting a wireless access point for identification authentication according to the key and an encryption algorithm; and
(c) accessing a WLAN if the identification authentication succeeds;
characterised by reading the key stored in the identification card which detachable from the wireless terminal.

According to a second aspect of the invention there is provided a wireless terminal for use in a WLAN, comprising: an information reading unit for reading a key stored in an identification card; an identification authenticating unit for requesting a wireless access point for identification authentication according to the key and an encryption algorithm; and a network accessing unit for accessing a WLAN if the identification authentication succeeds; characterised in that the identification card is detachable from the wireless terminal.

The invention also provides a method for enhancing WLAN security, comprising, at a wireless terminal, performing the method according to the first aspect of the invention, and at a wireless access point, processing a request for identification authentication initialized by the wireless terminal by utilizing a key corresponding to the key in the identification card used by the wireless terminal and a decryption algorithm corresponding to the encryption algorithm used by the wireless terminal, and permitting the wireless terminal to access a WLAN if the identification authentication succeeds.

The invention also provides a system comprising a wireless terminal according to the second aspect of the invention and a wireless access point, the wireless access point comprising: a key storage management unit for storing keys; an identification authentication processing unit for reading from the key storage management unit a key corresponding to the key in the identification card used by the wireless terminal, and for using said key to process a request for identification authentication initialized by the wireless terminal, according to a decryption algorithm corresponding to the encryption algorithm used by the wireless terminal; and
a network accessing unit for permitting the wireless terminal to access a WLAN when the identification authentication succeeds.

The above encryption and decryption algorithms can adopt algorithms in existing network protocols, or customized encryption and decryption algorithms.

### BRIEF DESCRIPTION OF DRAWINGS

Fig.1 is a block diagram illustrating the use of the encryption/decryption algorithms in 802.11 standards in accordance with the present invention;
Fig.2 is a block diagram illustrating the use of customized encryption/decryption algorithms added to 802.11 standards in accordance with the present invention.

### DETAILED DESCRIPTION OF THE INVENTION

Keys are stored in an ID card independent of a wireless terminal; when a user wants to access the WLAN through a wireless terminal, he has to provide the key to the wireless terminal by using the ID card; the wireless terminal requests the wireless AP for ID authentication according to the acquired key, if ID authentication succeeds, the wireless AP approves the wireless terminal to access the network and the user can access the WLAN through the wireless terminal; otherwise, the wireless AP refuses the wireless terminal and the user can't access the WLAN through the wireless terminal.

A detailed description will be given below to the WLAN security enhancement method using ID card in accordance with the present invention, exemplifying an embodiment in which a reader attempts to access the e-library in the WLAN.

When a reader wants to download e-books from the e-library in the WLAN, the librarian provide him with an ID card in which keys are stored. The reader can insert the ID card into the WLAN card of a wireless terminal. The wireless terminal first reads keys from the ID card through its WLAN card, and requests the wireless AP for ID authentication according to the read key. If ID authentication succeeds, the wireless AP approves the wireless terminal to access the network, and thus the reader can download e-books from the e-library through the wireless terminal; otherwise, the wireless AP refuses the wireless terminal to access the network and thus the reader can't download e-books from the e-library through the wireless terminal. If the reader can download e-books from the e-library through the wireless terminal, he pulls out the ID card from the WLAN card of the wireless terminal and returns it to the librarian when leaving the e-library.

The above ID card can store keys to be used in WLAN, as well as other keys to be used for systems following other standards, such as keys for GPRS and those for 3G systems. Users generally prefer to integrate keys for multiple standards into one single card, so keys for multiple standards can be integrated into the ID card in accordance with the present invention by referring to the GPRS SIM card used in notebook PC.

There are two cases during ID authentication using the ID card: one case is that only use the encryption/decryption algorithms in existing network protocols; the other is that use the encryption/decryption algorithms in existing network protocols and the customized encryption/decryption algorithms. Taking 802.11 standards as example, we can use the encryption/decryption algorithms in 802.11 standards only, or use the encryption/decryption algorithms in existing 802.11 standards along with the customized encryption/decryption algorithms newly added into 802.11 standards. Detailed description will be given below to the two cases.

### I. Only use the encryption/decryption algorithm in existing 802.11 standards

In this case, only the encryption/decryption algorithms in existing 802.11 standards are used for ID authentication. The same encryption/decryption algorithm in 802.11 standards is used to encrypt and decrypt the information for ID authentication, and furthermore the same key is used for encryption and decryption in the same encryption/decryption algorithm, therefore the keys in 802.11 standards should be managed very strictly in this case. For instance, the keys for use in WEP or AES are stored in the ID card, and then the ID card can be distributed to users in visible ways to avoid leakage of keys.

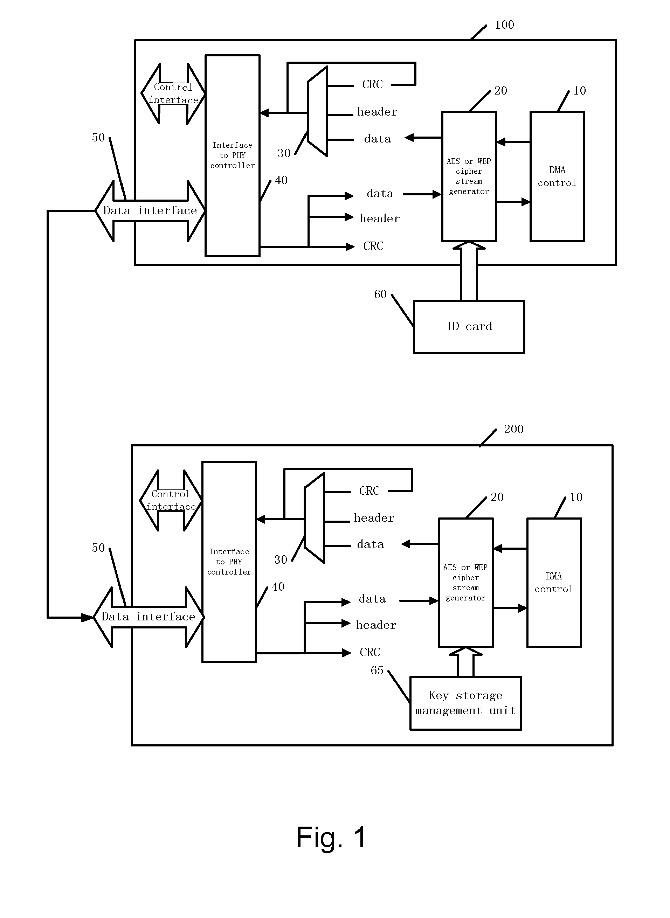

Fig. 1 is a block diagram illustrating the structure of ID authentication by only using the encryption/decryption algorithms in existing 802.11 standards and the ID card. A description will be given below to the procedure as how the wireless terminal requests the wireless AP for ID authentication, in conjunction with Fig. 1.

When wireless terminal 100 requests wireless AP 200 for ID authentication, on the receipt of the plaintext message for ID authentication from the wireless AP, Direct Memory Access (DMA) control module 10 in wireless terminal 100 acquires the plaintext message for ID authentication and sends it to AES/WEP cipher stream generator 20. After receiving the plaintext message for ID authentication, AES/WEP cipher stream generator 20 acquires the encryption key from ID card 60, and encrypts the plaintext message with the encryption key and encryption algorithm in 802.11 standards, to get the ciphertext message for ID authentication, and then sends the ciphertext message to frame generating unit 30. On receipt of the ciphertext message for ID authentication, frame generating unit 30 synthesizes it with corresponding frame header and CRC to get the ID authentication data frame of the ciphertext, then sends the synthesized ID authentication data frame of the ciphertext to wireless AP 200 through physical layer controller interface 40 and data interface 50.

After receiving the ID authentication data frame of the ciphertext from the wireless terminal, wireless AP 200 sends the ID authentication data frame of the ciphertext containing frame header, CRC and the data frame of cipher message for ID authentication to AES/WEP cipher stream generator 20 through data interface 50 and physical layer controller interface 40. AES/WEP cipher stream generator 20 extracts the ciphertext message for ID authentication from the received ID authentication data frame of the ciphertext, and then decrypts the ciphertext message for ID authentication with the decryption algorithm in existing 802.11 standards, according to the decryption key corresponding to the encryption key used by the wireless terminal stored in key storage management unit 65, to get the plaintext message for ID authentication, and sends it to DMA control module 10. DMA control module 10 sends the received plaintext message for ID authentication to the corresponding processing module (not shown in Fig. 1), to judge whether it accords with the original plaintext message for ID authentication sent to the wireless terminal. If yes, it indicates that ID authentication for the wireless terminal succeeds and the wireless terminal can access the WLAN; otherwise, it indicates that ID authentication for the wireless terminal fails and the wireless terminal can't access the WLAN.

### II. Use encryption/decryption algorithms in existing 802.11 standards along with customized encryption/decryption algorithms

In this case, the wireless terminal encrypts the plaintext message for ID authentication by using the encryption algorithm in existing 802.11 standards, and then encrypts it further with customized encryption algorithm. Thus, ID authentication for authorized wireless terminals won't succeed even if they know the encryption algorithm in 802.11 standards, because the customized encryption algorithm is unknown. Accordingly, unauthorized wireless terminals are prevented to enter the WLAN.

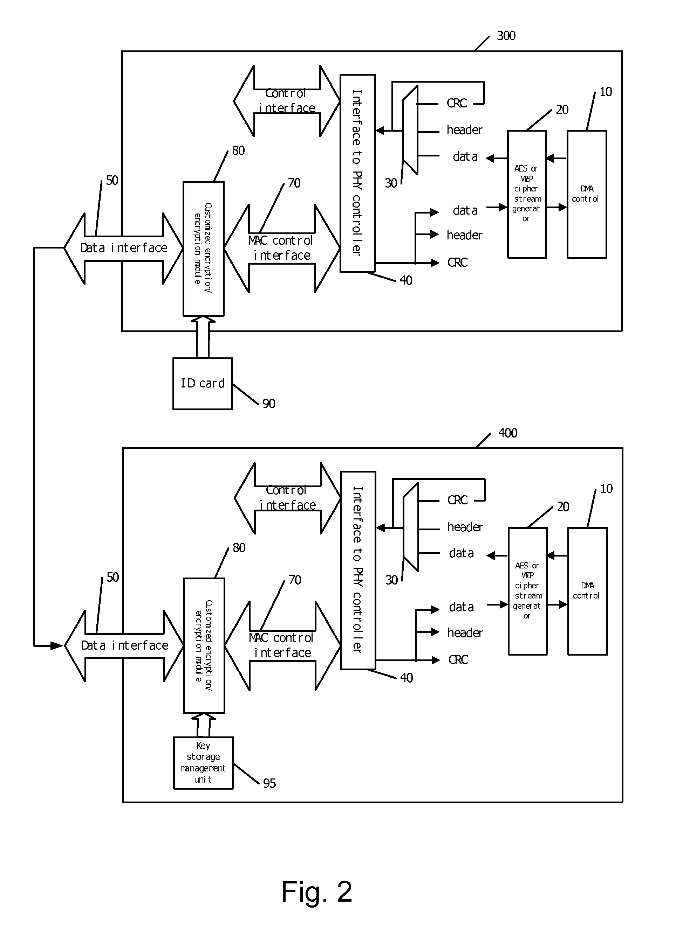

Fig. 2 displays the block diagram in which customized encryption/decryption algorithms are added into 802.11 standards. As shown in the figure, the customized encryption/decryption module 80 is added into existing WLAN to implement the customized algorithms such as RSA, DES, DSA, MD5 or other new algorithms, and the keys for the customized encryption/decryption algorithms are stored in ID card 90. It can be seen from Fig. 2 that the customized encryption/decryption algorithms can be easily added into 802.11 standards through ID card, without making modifications to any high-level protocol in WLAN.

A detailed description will go below to the procedure as how WLAN uses encryption/decryption algorithms in 802.11 existing standards and the customized encryption/decryption algorithms for ID authentication, in conjunction with the structure as shown in Fig. 2.

When wireless terminal 300 requests AP 400 for ID authentication, the wireless AP first sends the plaintext message for ID authentication to the wireless terminal.

On receipt of the plaintext message for ID authentication from the wireless AP, DMA control module 10 in the wireless terminal acquires the plaintext message for ID authentication and sends it to AES/WEP cipher stream generator 20. After obtaining the plaintext message for ID authentication, AES/WEP cipher stream generator 20 encrypts it by using the encryption algorithm in 802.11 standards and corresponding encryption key, to get the preliminary encryption message for ID authentication, and sends it to frame generating unit 30. Frame generating unit 30 synthesizes the preliminary encryption message for ID authentication and the corresponding frame header and CRC into the preliminary encrypted ID authentication frame, and sends it to customized encryption/decryption module 80 through physical layer controller interface 40 and MAC layer data interface 70. Customized encryption/decryption module 80 further encrypts the received preliminary encrypted ID authentication frame by using customized encryption algorithm according to the encryption key obtained from ID card 90, to get the ID authentication frame of the ciphertext, and sends it to data interface 50. In the end, data interface 50 sends the ID authentication frame of the ciphertext to wireless AP.

On receipt of the ID authentication frame of the ciphertext sent by the wireless terminal via data interface 50, the wireless AP sends it to customized encryption/decryption module 80. Customized encryption/decryption module 80 uses customized decryption algorithm to decrypt the received ID authentication frame of the ciphertext according to the decryption key stored in key storage management unit 95 and corresponding to the encryption key used by the customized encryption algorithm of the wireless terminal, to get the preliminary decrypted ID authentication frame (including frame header, CRC and the preliminary ciphertext message for ID authentication), and sends it to AES/WEP cipher stream generator 20 through MAC layer data interface 70 and physical layer controller interface 40. AES/WEP cipher stream generator 20 extracts the preliminary ciphertext message for ID authentication from the received preliminary decrypted ID authentication frame, then further decrypts the message by using the decryption algorithm in 802.11 standards and the corresponding decryption key, to get the plaintext message for ID authentication, and sends the plaintext message for ID authentication to DMA control module 10. DMA control module 10 sends the plaintext message for ID authentication to the corresponding processing module (not displayed in Fig. 2) to judge whether it accords with the original plaintext message for ID authentication sent to the wireless terminal. If yes, it indicates that ID authentication for the wireless terminal succeeds and the wireless can access the WLAN; otherwise, it indicates that ID authentication for the wireless terminal fails and the wireless terminal can't access the WLAN.

As described above, with regard to the WLAN security enhancement method as provided in the present invention, keys are stored in an ID card to enhance security of the keys, and meanwhile wireless terminals attempting to access the WLAN need pass mandatory ID authentication, thus network insecurity caused by the entry of unauthorized wireless terminals can be avoided.

It is to be understood by those skilled in the art that the method for enhancing WLAN security as disclosed in this invention can be modified considerably without departing from the spirit and scope of the invention as defined by the appended claims.

## Claims

1. A method for enhancing WLAN security, comprising at a wireless terminal (100):
(a) reading a key stored in an identification card (60);
(b) requesting a wireless access point (200) for identification authentication according to the key and an encryption algorithm; and
(c) accessing a WLAN if the identification authentication succeeds;
**characterised by** reading the key stored in the identification card (60) which is detachable from the wireless terminal (100).

2. A wireless terminal (100) for use in a WLAN, comprising:
an information reading unit (20) for reading a key stored in an identification card (60);
an identification authenticating unit (10) for requesting a wireless access point (200) for identification authentication according to the key and an encryption algorithm;
a network accessing unit (50) for accessing a WLAN if the identification authentication succeeds;
**characterised in that** the identification card (60) is detachable from the wireless terminal (100).

3. A method for enhancing WLAN security , comprising:
at a wireless terminal (100) performing the method as claimed in claim 1, and at a wireless access point (200):
processing a request for identification authentication initialized by the wireless terminal (100) by utilizing a key corresponding to the key in the identification card (60) used by the wireless terminal (100) and a decryption algorithm corresponding to the encryption algorithm used by the wireless terminal (100); and
permitting the wireless terminal (100) to access a WLAN if the identification authentication succeeds.

4. A system comprising a wireless terminal (100) as claimed in claim 2 and a wireless access point (200), the wireless access point (200) comprising:
a key storage management unit (65) for storing keys;
an identification authentication processing unit (20) for reading from the key storage management unit (65) a key corresponding to the key in the identification card (60) used by the wireless terminal (100), and for using said key to process a request for identification authentication initialized by the wireless terminal (100, according to a decryption algorithm corresponding to the encryption algorithm used by the wireless terminal (100); and
a network accessing unit (50) for permitting the wireless terminal (100) to access a WLAN when the identification authentication succeeds.
